# EUROPEAN PATENT APPLICATION

(11) **EP 3 995 869 A1**
(43) Date of publication of application: **11.05.2022**
(21) Application number: 20834752.6
(22) Date of filing: 07.05.2020
(51) Int. Cl.: G02B 5/22, G02B 5/28, H04B 13/02, H04B 10/80

(54) **UNDERWATER OPTICAL COMMUNICATION SYSTEM**

(30) Priority: 04.07.2019 JP 2019125159
(71) Applicant: SHIMADZU CORPORATION, Kyoto-shi, Kyoto 604-8511 (JP)
(72) Inventor: OWAKI, Kazuma, Kyoto-shi, Kyoto 604-8511 (JP)
(74) Representative: Müller-Boré & Partner Patentanwälte PartG mbB
(86) International application number: PCT/JP2020/018555
(87) International publication number: WO 2021/002093

(57) **Abstract**

An underwater optical communication system (100) is provided with a first optical communication device (1) that includes a first filter (12), a second optical communication device (2) that includes a second filter (22) and performs bi-directional optical communication with the first optical communication device. The first filter is configured to selectively transmit light of a predetermined wavelength band including a second wavelength (41) but not including a first wavelength (40). The second filter is configured to selectively transmit light of a predetermined wavelength band including the first wavelength but not including the second wavelength.

## Description

### Technical Field

The present invention relates to an underwater optical communication system.

### Background of the Invention

Conventionally, an underwater optical communication system is known. Such an underwater communication imaging system is disclosed, for example, by Japanese Unexamined Patent Application Publication No. 2017-228889.

Japanese Unexamined Patent Application Publication No. 2017-228889 discloses an underwater optical communication system provided with a first underwater communication device and a second underwater communication device. The first underwater communication device is provided with an irradiation unit for emitting blue visible light, a light-receiving unit for receiving visible light, and a control unit for controlling the irradiation unit and the light-receiving unit. The second underwater communication device is provided with an irradiation unit for emitting blue visible light, a light-receiving unit for receiving visible light, and a control unit for controlling the irradiation unit and the light-receiving unit.

The underwater optical communication system disclosed in Japanese Unexamined Patent Application Publication No. 2017-228889 is configured to transmit and receive information by receiving the light emitted from the irradiation unit of the first underwater communication device with the light-receiving unit of the second underwater communication device.

### Prior Art Document

### Patent Document

Patent Document 1: Japanese Unexamined Patent Application Publication No. 2017-228889

### SUMMARY OF THE INVENTION

### Problems to be Solved by the Invention

There are cases in which bi-directional communication is performed between a plurality of communication devices placed underwater. In a case where the bi-directional optical communication between a plurality of communication devices is performed using the underwater optical communication system disclosed in Japanese Unexamined Patent Application Publication No. 2017-228889, blue light is emitted from both the communication devices. For this reason, in a case where one of the communication devices is emitting signal light, when the other communication device also emits signal light, both the signal light interferes with each other. For this reason, when performing bi-directional communication, in order to prevent both the signal light from interfering with each other, it is required to perform the emission of light signal by one of the communication devices after the end of the emission of light signal by the other communication device. In the case of alternately emitting signal light from each communication device, as compared with the case in which bi-directional communication is performed, it takes a longer time. Therefore, an underwater optical communication system capable of performing bi-directional communication at the same time while preventing interference of signal light has been desired.

The present invention has been made to solve the aforementioned problems. One object of the present invention is to provide an underwater optical communication system capable of performing bi-directional communication at the same time while preventing interference of signal light.

### Means for Solving the Problems

In order to attain the above-described problems, an underwater optical communication system according to one aspect of the present invention includes:
a first optical communication device to be placed underwater, the first optical communication device including a first light-emitting unit, a first light-receiving unit, and a first filter, the first light-emitting unit being configured to emit, as signal light, first light in which a first wavelength that is in a blue or purple wavelength bandwidth is a center wavelength; and
a second optical communication device configured to be placed underwater to perform bi-directional optical communication with the first optical communication device, the second optical communication device including a second light-emitting unit, a second light-receiving unit, and a second filter, the second light-emitting unit being configured to emit, as signal light, second light in which a second wavelength that is in a green wavelength bandwidth when the first light is green and in a green or blue wavelength bandwidth when the first light is purple is a center wavelength,
wherein the first filter is configured to selectively transmit light of a predetermined wavelength band including the second wavelength but not including the first wavelength, and
wherein the second filter is configured to selectively transmit light of a predetermined wavelength band including the first wavelength but not including the second wavelength.

### Effects of the Invention

In the underwater optical communication system according to the first aspect of the present invention, as described above, the first optical communication device is provided with a first filter that selectively transmits light of a predetermined wavelength band including a second wavelength but not including a first wavelength. The second optical communication device is provided with a second filter that selectively transmits light of a predetermined wavelength band including a first wavelength but not including a second wavelength. With this, the color of the first light emitted from the first optical communication device and the color of the second light emitted from the second optical communication device can be differentiated from each other. Further, it is possible to suppress the light of the first light from being incident on the first light-receiving unit by the first filter. Further, it is possible to suppress the light of the second light from being incident on the second light-receiving unit by the second filter. As a consequence, it is possible to provide an underwater optical communication system capable of performing bi-directional communication at the same time while preventing signal light from being interfered with each other. This makes it possible to shorten the time required for communication. In water, light is attenuated according to the communication distance. Green light, blue light, and purple light are less likely to be attenuated underwater. Therefore, optical communication is performed by using blue or purple first light and green or blue second light which is different from the color of the first light. With this, as compared with the case in which optical communication is performed using, for example, red or orange light, it is possible to increase the communication distance. As a result, even underwater, communication can be carried out between distant communication devices.

### BRIEF DESCRIPTION OF THE DRAWINGS

FIG. 1 is a schematic diagram showing an underwater optical communication system according to one embodiment.
FIG. 2 is a schematic block diagram showing a first optical communication device and a second optical communication device.
FIG. 3 is a schematic diagram for explaining a transmissible wavelength bandwidth of a first filter.
FIG. 4 is a schematic diagram for explaining the light incident on the first optical communication device.
FIG. 5 is a schematic diagram for explaining a transmissible wavelength bandwidth of a second filter.
FIG. 6 is a schematic diagram for explaining the light incident on the second optical communication device.
FIG. 7 is a diagram for explaining reflected light of first light by a scattering material.
FIG. 8 is a diagram for explaining reflected light of the first light by a first window.
FIG. 9 is a schematic diagram for explaining a transmissible wavelength bandwidth of a first filter and a transmissible wavelength bandwidth of a third filter when light is incident from an oblique direction.
FIG. 10 is a schematic block diagram showing a second optical communication device according to a first modification.
FIG. 11 is a schematic diagram for explaining a wavelength bandwidth of light that transmits through a second filter when light is incident from an oblique direction according to a second modification.
FIG. 12 is a schematic block diagram showing a second optical communication device according to the second modification.

### EMBODIMENTS FOR CARRYING OUT THE INVENTION

Hereinafter, some embodiments in which the present invention is embodied will be described with reference to the attached drawings.

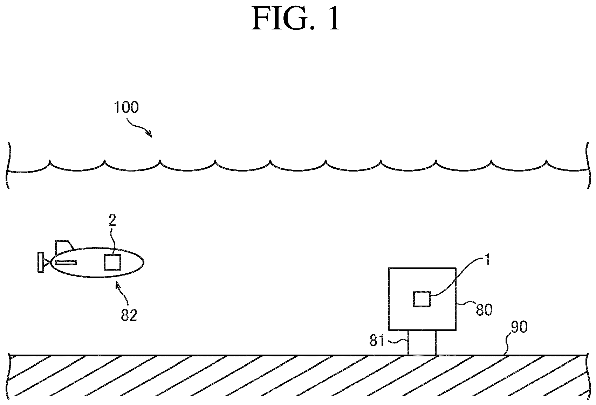

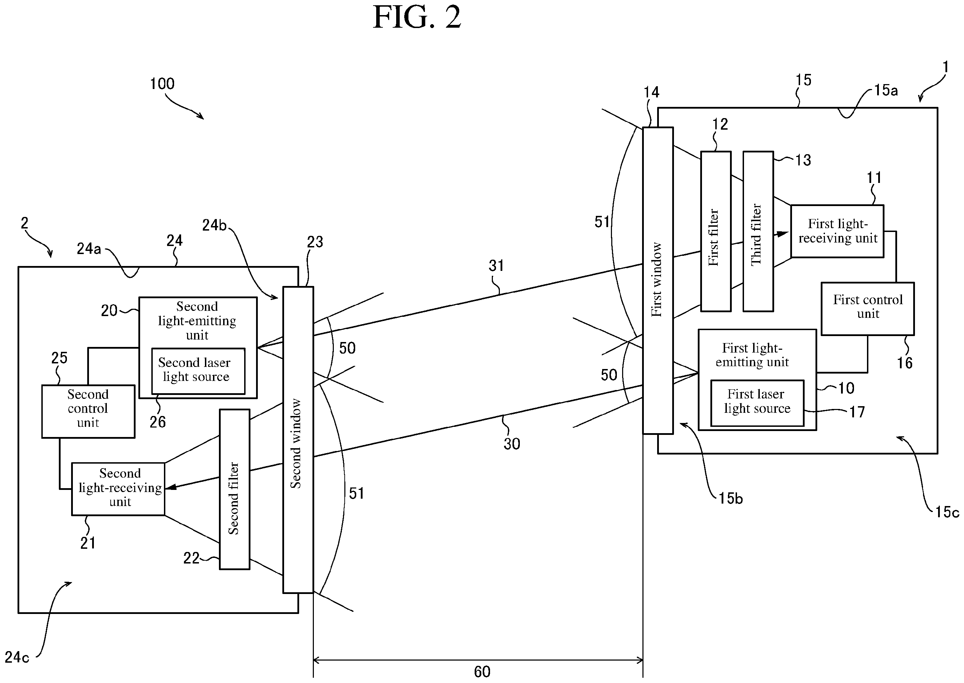

Referring to FIGS. 1 and 2, the configuration of an underwater optical communication system 100 according to one embodiment will be described.

As shown in FIG. 1, the underwater optical communication system 100 is provided with a first optical communication device 1 and a second optical communication device 2. The first optical communication device 1 and the second optical communication device 2 are configured to perform bi-directional optical communication at the same time.

The first optical communication device 1 is placed underwater. Specifically, the first optical communication device 1 is provided to a fixed body 80 fixed underwater. The fixed body 80 is fixed underwater by being installed on the seabed 90 via a holding member 81.

The second optical communication device 2 is placed underwater. Specifically, the second optical communication device 2 is provided to a moving body 82 that moves underwater. The moving body 82 includes, for example, an AUV (Autonomous Underwater Vehicle).

As shown in FIG. 2, the first optical communication device 1 includes a first light-emitting unit 10, a first light-receiving unit 11, a first filter 12, a third filter 13, a first window 14, a first housing 15, and a first control unit 16.

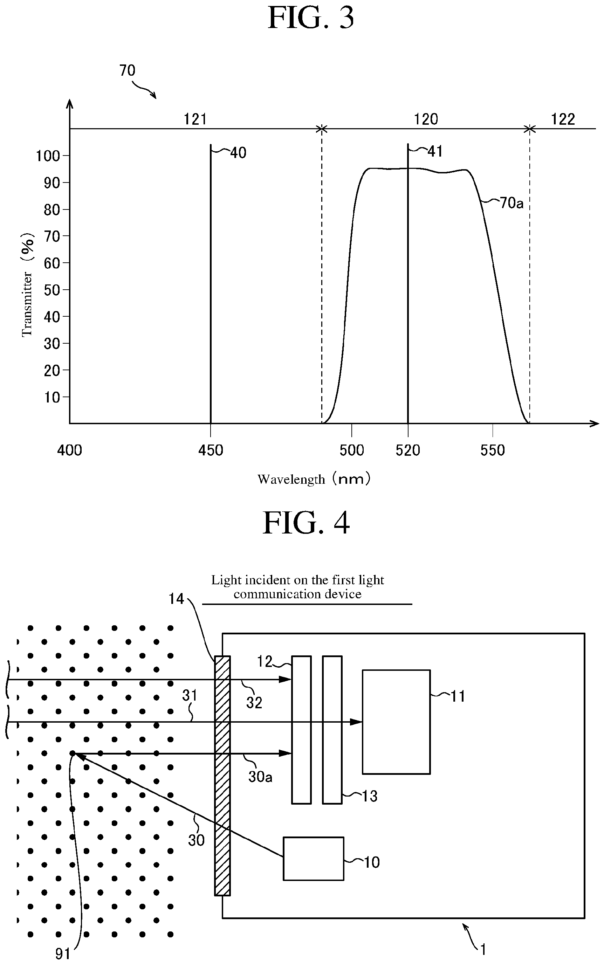

The first light-emitting unit 10 is configured to emit first light 30 as signal light. The first light 30 is light in which a first wavelength 40 (see FIG. 3) that is blue or purple wavelength bandwidth light is a center wavelength. The blue wavelength bandwidth denotes a wavelength bandwidth in a range from 435 nm to 480 nm. Also, the purple wavelength bandwidth denotes a wavelength bandwidth in a range from 400 nm to 435 nm. In this embodiment, the first light-emitting unit 10 is configured to emit, as the first light 30, light in which a first wavelength 40 that is in a blue wavelength bandwidth is a center wavelength. The first light-emitting unit 10 is configured to emit, for example, as the first wavelength 40, light of a center wavelength of 450 nm. The first light-emitting unit 10 includes a first laser light source 17 that generates the first light 30. The first laser light source 17 includes, for example, a semiconducting laser light source. Note that the signal light denotes the light for transmitting information by changing the intensity of the light source at a predetermined timing.

The first light-receiving unit 11 is configured to receive the second light 31 emitted from the second light-emitting unit 20, which will be described later. The first light-receiving unit 11 includes, for example, a photomultiplier tube.

The first filter 12 is configured to selectively transmit the light of a predetermined wavelength band out of the light incident on the first light-receiving unit 11. The detailed configuration of the first filter 12 will be described later.

The third filter 13 is configured to transmit the light of a predetermined wavelength or greater out of the light selectively transmitted by the first filter 12. The detailed configuration of the third filter 13 will be described later.

The first optical communication device 1 is configured to emit the first light 30 via the first window 14. Further, the first optical communication device 1 is configured to receive the second light 31 via the first window 14. The first window 14 is formed of, for example, an acrylic plate, a glass plate, or the like.

The first housing 15 has a cylindrical shape. The first housing 15 has a first peripheral wall 15a and a first opening 15b closed by the first window 14. The first peripheral wall 15a and the first window 14 for closing the first opening 15b constitute a closed first interior space 15c sealed in a water-tight manner.

The first light-emitting unit 10, the first light-receiving unit 11, the first filter 12, and the third filter 13 are provided in the first housing 15. In the first housing 15, no wall member for partitioning the first light-emitting unit 10 and the first light-receiving unit 11 is provided. The first light-emitting unit 10 and the first light-receiving unit 11 are provided at adjacent positions in the first housing 15. The first filter 12 is provided at a position between the first window 14 and the third filter 13. Further, the third filter 13 is provided at a position between the first filter 12 and the first light-receiving unit 11.

The first control unit 16 is a computer configured to include a CPU (Central Processing Unit), a ROM (Read Only Memory), a RAM (Random Access Memory), and the like. The first control unit 16 functions as a control unit for controlling each unit of the first optical communication device 1 by executing predetermined control programs by the CPU.

The second optical communication device 2 includes a second light-emitting unit 20, a second light-receiving unit 21, a second filter 22, a second window 23, a second housing 24, and a second control unit 25.

The second light-emitting unit 20 is configured to emit the second light 31 as signal light. The second light 31 is the light in which a second wavelength 41 (see FIG. 3) is a center wavelength. The second wavelength 41 is in a green wavelength bandwidth when the first light 30 is blue and in a green or blue wavelength bandwidth when the first light 30 is purple. The green wavelength bandwidth is a wavelength bandwidth from 500 nm to 560 nm. In this embodiment, since the first light-emitting unit 10 is configured to emit blue light as the first light 30, the second light-emitting unit 20 is configured to emit green light as the second light 31. Specifically, the second light-emitting unit 20 is configured to emit, as the light of the second wavelength 41, light in which a wavelength of 520 nm is a center wavelength. The second light-emitting unit 20 includes a second laser light source 26 for generating the second light 31. The second laser light source 26 includes, for example, a semiconducting laser light source.

The second light-receiving unit 21 is configured to receive the first light 30 emitted from the first light-emitting unit 10. The second light-receiving unit 21 includes, for example, a photomultiplier tube.

The second filter 22 is configured to selectively transmit the light of a predetermined wavelength band out of the light incident on the second light-receiving unit 21. The detailed configuration of the second filter 22 will be described later.

The second optical communication device 2 is configured to emit the second light 31 via the second window 23. Further, the second optical communication device 2 is configured to receive the first light 30 via the second window 23. The second window 23 is formed of, for example, an acrylic plate, a glass plate, or the like.

The second housing 24 has a cylindrical shape. The second housing 24 is provided with a second peripheral wall 24a and a second opening 24b closed by the second window 23. The second peripheral wall 24a and the second window 23 for closing the second opening 24b constitute a closed second interior space 24c sealed in a water-tight manner.

The second light-emitting unit 20, the second light-receiving unit 21, and the second filter 22 are provided in the second housing 24. In the second housing 24, no wall member for partitioning the second light-emitting unit 20 and the second light-receiving unit 21 is provided. The second light-emitting unit 20 and the second light-receiving unit 21 are provided at adjacent positions in the second housing 24. The second filter 22 is provided at a position between the second window 23 and the second light-receiving unit 21.

The second control unit 25 is a computer configured to include a CPU, a ROM, a RAM, and the like. The second control unit 25 functions as a control unit for controlling each unit of the second optical communication device 2 by executing predetermined control programs by the CPU.

In this embodiment, the underwater optical communication system 100 is configured as follows. That is, communication is performed between the first optical communication device 1 and the second optical communication device 2 by receiving the first light 30 emitted from the first optical communication device 1 by the second optical communication device 2. Further, communication is performed between the second optical communication device 2 and the first optical communication device 1 by receiving the second light 31 emitted from the second optical communication device 2 by the first optical communication device 1.

In this embodiment, the moving body 82 moves in the sea to inspect, for example, a structure laid on the seabed. The second optical communication device 2 is configured to transmit the inspection result acquired by the detection unit (not shown) provided to the moving body 82 to the first optical communication device 1 by the second light 31. Further, the first optical communication device 1 is configured to receive the inspection result transmitted from the second optical communication device 2 and transmit the received inspection result to a communication device provided on land, a mother ship, or the like. Note that when performing the communication between the first optical communication device 1 and the second optical communication device 2, the communication is performed by moving the moving body 82 to a communicable area.

The first light 30 and the second light 31 are different in color from each other. Therefore, the first optical communication device 1 and the second optical communication device 2 are configured to enable multiple optical communication for performing bi-directional communication by emitting the first light 30 and the second light 31 at the same time.

### (First Filter and Second Filter)

Next, referring o FIGS. 3 to 6, the first filter 12 and the second filter 22 will be described.

FIG. 3 is a graph 70 showing a transmissible predetermined wavelength band of the first filter 12. In the graph 70, the vertical axis represents the transmittance, and the horizontal axis represents the wavelength.

The transmittance change curve 70a shown in FIG. 3 represents the relation between the wavelength of light and the transmittance in the first filter 12. As shown in the transmittance change curve 70a, in this embodiment, the first filter 12 is configured to selectively transmit the light of a predetermined wavelength band including the second wavelength 41 but not including the first wavelength 40. The first filter 12 includes, for example, a filter having a characteristic that changes in the transmissible wavelength bandwidth due to the angle of the incident light. Specifically, the first filter 12 includes an interference-type filter. More specifically, the first filter 12 includes an interference-type bandpass filter.

The first filter 12 has a first transmission band 120 in which the second wavelength 41 is a center wavelength, a first lower blocking area 121 on the short wavelength side of the first transmission band 120, and a first upper blocking area 122 on the long wavelength side of the first transmission band 120. In this embodiment, since the second light 31 is green light, the first transmission band 120 is set in the range capable of transmitting the light in the green wavelength bandwidth. Further, the second light 31 emitted from the second light-emitting unit 20 causes slight wavelength deviation due to the product error. Therefore, the first transmission band 120 is configured to transmit light of a wavelength bandwidth covering from the wavelength on the short wavelength side from 500 nm by a predetermined wavelength to the wavelength on the long wavelength side from 550 nm by a predetermined wavelength. In this embodiment, as shown in FIG. 3, the first transmission band 120 is configured to be able to transmit light having wavelengths of 490 nm to 560 nm. Also, since the first transmission band 120 is configured to be from 490 nm to 560 nm, the first lower blocking area 121 is a wavelength bandwidth smaller than 490 nm, and the first upper blocking area 122 is a wavelength bandwidth greater than 560 nm.

Since the first optical communication device 1 is provided with the first filter 12, it is possible to cause the first filter to selectively transmit the second light 31 incident via the first window 14 to be incident on the first light-receiving unit 11. Further, as shown in FIG. 4, for example, even in a case where the first light 30 emitted from the first optical communication device 1 is scattered by a scattering material 91 to be incident from the front direction via the first window 14, the first light is removed by the first filter 12. Therefore, it is possible to prevent that the first light 30 is incident on the first light-receiving unit 11. Further, even in a case where disturbance light 32, such as, e.g., sunlight, is incident through the first window 14, the disturbance light 32 is removed by the first filter 12. Therefore, it is possible to prevent the disturbance light 32 is incident on the first light-receiving unit 11.

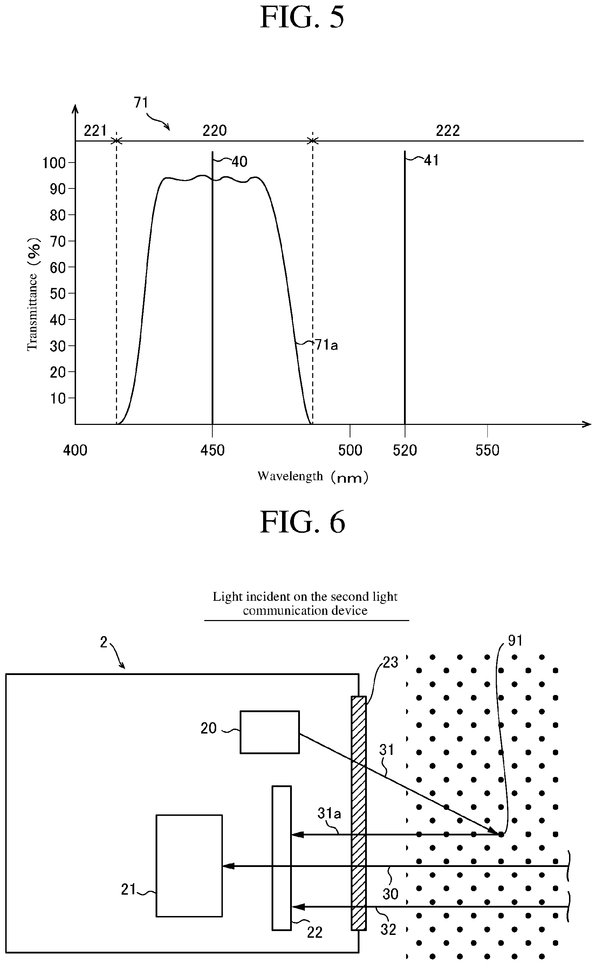

FIG. 5 is a graph 71 showing a wavelength bandwidth that the second filter 22 allows light transmission. In the graph 71, the vertical axis represents the transmittance, and the horizontal axis represents the wavelength.

The transmittance change curve 71a shown in FIG. 5 represents the relation between the wavelength of light and the transmittance in the second filter 22. As shown in the transmittance change curve 71a, in this embodiment, the second filter 22 is configured to selectively transmit the light of a predetermined wavelength band including the first wavelength 40 but not including the second wavelength 41. The second filter 22 includes, for example, a filter having a characteristic that changes in the transmissible wavelength bandwidth due to the angle of the incident light. Specifically, the second filter 22 includes an interference-type filter. More specifically, the second filter 22 includes an interference-type bandpass filter.

The second filter 22 has a second transmission band 220 in which a first wavelength 40 is a center wavelength, a second lower blocking area 221 on the short wavelength side of the second transmission band 220, and a second upper blocking area 222 on the long wavelength side of the second transmission band 220. In this embodiment, since the first light 30 is blue light, the second transmission band 220 is configured in a range capable of transmitting the light of a blue wavelength bandwidth. Further, the first light 30 emitted from the first light-emitting unit 10 causes slight wavelength deviation due to the product error. Therefore, the second transmission band 220 is configured to be able to transmit the light of a wavelength bandwidth from the wavelength shorter by a predetermined wavelength from 480 nm on the short wavelength side to the wavelength longer by a predetermined wavelength from 480 nm on the long wavelength side. In this embodiment, as shown in FIG. 5, the second transmission band 220 is configured to be able to transmit the light of a wavelength of 420 nm to 490 nm. Since the first transmission band 120 is set from 420 nm to 490 nm, the second lower blocking area 221 is a wavelength bandwidth smaller than 420 nm, and the second upper blocking area 222 is a wavelength bandwidth greater than 490 nm.

Since the second optical communication device 2 is provided with the second filter 22, it is possible to selectively transmit the first light 30 incident through the second window 23 to be incident on the second light-receiving unit 21. Further, as shown in FIG. 6, for example, even in a case where the second light 31 emitted from the second optical communication device 2 is scattered by a scattering material 91 to be incident from the front direction through the second window 23, this second light 31 is removed by the second filter 22. Therefore, it is possible to prevent the second light 31 is incident on the second light-receiving unit 21. Further, even in a case where disturbance light 32, such as, e.g., sunlight, is incident through the second window 23, the disturbance light 32 is removed by the second filter 22. Therefore, it is possible to prevent the disturbance light 32 is incident on the second light-receiving unit 21.

In this embodiment, the second optical communication device 2 is provided to the moving body 82. Therefore, in the case of performing communication between the first optical communication device 1 and the second optical communication device 2, it is difficult to fix the position of the second optical communication device 2. Therefore, it is difficult to maintain such that the relative position of the communication devices does not change. Therefore, in this embodiment, the first optical communication device 1 and the second optical communication device 2 are respectively configured as follows. That is, the first optical communication device 1 and the second optical communication device 2 are configured to have a wide viewing range capable of emitting the first light 30 and the second light 31, respectively. Further, the first optical communication device 1 and the second optical communication device 2 are configured such that the viewing range capable of receiving the second light 31 and the first light 30 is widened, respectively. More specifically, as shown in FIG. 2, the first optical communication device 1 and the second optical communication device 2 are configured to be able to emit the first light 30 and the second light 31 at a first irradiation angle range 50, respectively. Further, the first optical communication device 1 and the second optical communication device 2 are respectively configured to be able to receive the second light 31 and the first light 30 at a second irradiation angle range 51 greater than the first irradiation angle range 50.

When the light-receiving field of view of the first optical communication device 1 and that of the second optical communication device 2 are widened, it is possible to receive the light incident from the oblique direction. Therefore, even in a case where the position of the second optical communication device 2 is not accurately fixed, it is possible to perform communication between the first optical communication device 1 and the second optical communication device 2. However, in this embodiment, the first filter 12 and the second filter 22 each are an interference-type filter having a characteristic that changes in the transmissible wavelength bandwidth due to the angle of the incident light. Therefore, in a case where the light-receiving field of view of the first light-receiving unit 11 is widened, it is conceivable that the reflected first light 30 is incident on the first filter 12 from the oblique direction when the first light 30 is reflected.

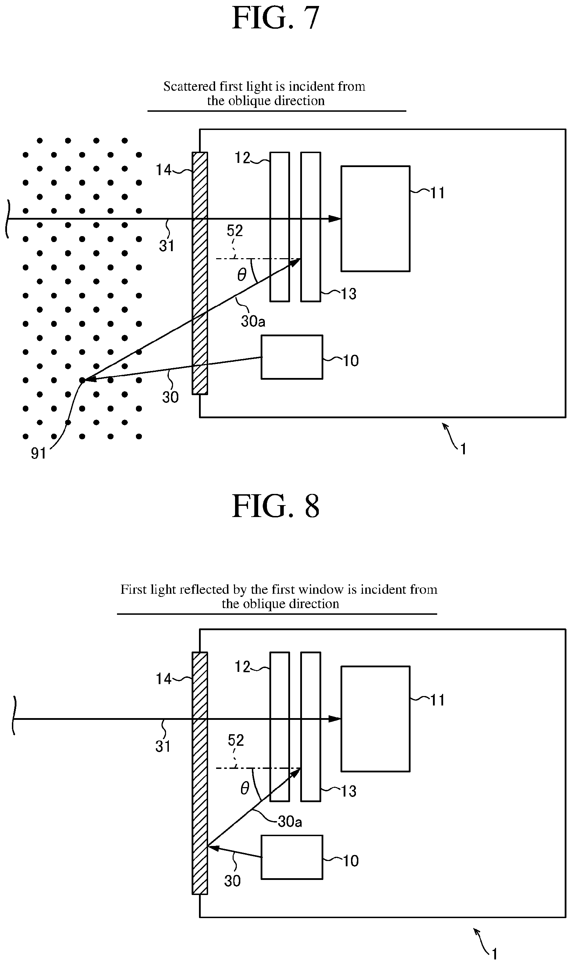

Next, referring to FIGS. 7 and 8, an example will be described in which the reflected first light 30 is incident on the first filter 12 from the oblique direction when the first light 30 is reflected.

In this embodiment, the first optical communication device 1 and the second optical communication device 2 are placed underwater. Therefore, as shown in FIG. 7, there is a scattering material 91 between the first optical communication device 1 and the second optical communication device 2. The scattering material 91 includes, for example, marine snow. The marine snow refers to planktonic emissions, carcasses, or degraded particles thereof, or physically produced particles.

The first light 30 emitted through the first window 14 will be scattered by the scattering material 91 underwater. Depending on the scattering angle of the first light 30 by the scattering material 91, there is a case in which the first light 30 is scattered on the first window 14 side and incident on the first filter 12 from an oblique direction.

As shown in FIG. 8, the first light 30 emitted from the first light-emitting unit 10 is also reflected by the first window 14. In this embodiment, the first optical communication device 1 is configured to emit light from the first light 30 and receive light from the second light 31 by the common first window 14. Therefore, depending on the reflection angle, there is a case in which the first light 30a reflected by the first window 14 is incident on the first filter 12 from an oblique direction.

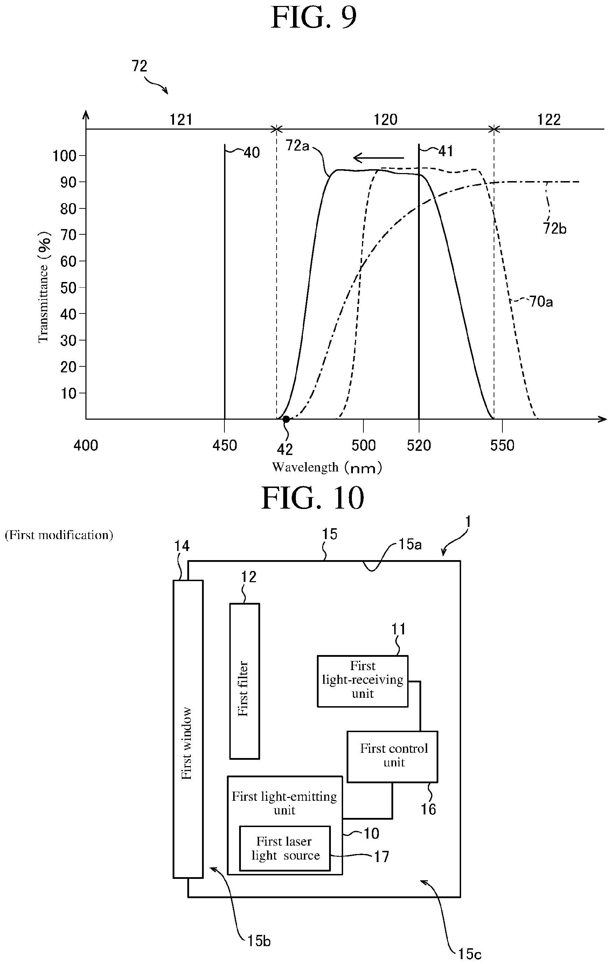

FIG. 9 is a graph 72 showing a transmissible predetermined wavelength band in which the first filter 12 allows the light transmission when the light is incident on the first filter 12 from an oblique direction. In the graph 72, the vertical axis represents the transmittance, and the horizontal axis represents the wavelength. The transmittance change curve 72a shown in FIG. 9 is a curve representing the relation between the wavelength of the light and the transmittance in the first filter 12 when the light is incident from the oblique direction. Note that in the graph 72, the transmittance change curve 70a in the graph 70 when the light is incident on the first filter 12 from the front is illustrated by a broken line.

The first filter 12 is an interference-type filter. Therefore, when light is incident from the oblique direction, as shown in the transmittance change curve 72a, the transmissible wavelength bandwidth is shifted to the short wavelength side. As the incident angle θ increases, the transmissible wavelength bandwidth of the first filter 12 is shifted toward the short wavelength side. For this reason, when the incident angle θ of the reflected first light 30a is increased, there is a case in which the first wavelength 40 is included in the first transmission band 120 of the first filter 12. Note that the angle θ means the angle between the normal line 52 of the first filter 12 and the reflected first light 30a.

When the first wavelength 40 is included in the first transmission band 120 of the first filter 12, there is a case in which the first light 30 is transmitted through the first filter 12. When the first light 30 is transmitted through the first filter 12, there is a possibility that the interference occurs between the first light 30 and the second light 31 in the first light-receiving unit 11. Note that, in the water, depending on the distance 60 (see FIG. 2) between the first optical communication device 1 and the second optical communication device 2, the first light 30 and the second light 31 will be exponentially attenuated. For example, in a case where the distance 60 between the first optical communication device 1 and the second optical communication device 2 is 20 m, the first light 30 and the second light 31 will be attenuated to 1/10. Therefore, the first light-receiving unit 11 and the second light-receiving unit 21 are each constituted by a photomultiplier tube having high detection sensitivity. Therefore, for example, when the distance 60 between the first optical communication device 1 and the second optical communication device 2 is 100 m, the second light 31 incident on the first light-receiving unit 11 will be attenuated to 1/1000 or less. Therefore, the first light-emitting unit 10 and the second light-emitting unit 20 emit the first light 30 and the second light 31 each having the intensity capable of performing communication even if they are attenuated to 1/1000 or less. Therefore, even in a case where 0.1% of the reflected first light 30a is transmitted through the first filter 12, the first light 30 and the second light 31 interfere with each other in the first light-receiving unit 11.

Therefore, in this embodiment, the third filter 13 is provided between the first filter 12 and the first light-receiving unit 11. The third filter 13 is a filter having a characteristic that allows the transmission of the light of a predetermined wavelength or greater. Specifically, as shown by the transmittance change curve 72b of the one-dot chain line in FIG. 9, the third filter 13 is configured to transmit the light of a wavelength greater than a third wavelength 42 greater than the first wavelength 40 but smaller than the second wavelength 41. Note that the third wavelength 42 is set to a wavelength that does not transmit the reflected first light 30a even in a case where the first transmission band 120 of the first filter 12 is shifted to the short wavelength side. In this embodiment, as shown in FIG. 9, the third wavelength 42 is set to 460 nm. Note that the third filter 13 is a filter that does not change in the optical property (transmission wavelength) depending on the angle of the incident light. Specifically, the third filter 13 includes an absorption-type filter. More specifically, the third filter 13 includes an absorption-type long-pass filter.

By providing the third filter 13 at a position between the first filter 12 and the first light-receiving unit 11, even in a case where the first light 30a reflected by a scattering material 91 and/or the first window 14 is incident from the oblique direction, the first light 30 transmitted through the first filter 12 will be absorbed by the third filter 13. Therefore, it is possible to suppress that the first light 30 incident from the oblique direction is incident on the light-receiving unit 11. Therefore, in the first light-receiving unit 11, the interference between the first light 30 and the second light 31 can be suppressed.

Note that the second optical communication device 2 emits the light second light 31 and receives the first light 30. That is, the second optical communication device 2 receives the light shorter in wavelength than the light that the first optical communication device 1 receives. Therefore, even if the reflected second light 31 is incident on the second filter 22 from the oblique direction, the reflected second light 31 is removed by the second filter 22. Therefore, in the second optical communication device 2, it is not required to provide the third filter 13.

### (Effects of This Embodiment)

In this embodiment, the following effects can be obtained.

In this embodiment, as described above, the underwater optical communication system 100 is provided with the first optical communication device 1 and the second optical communication device 2 for performing the bi-directional optical communication with this first optical communication device 1. The first optical communication device 1 is provided with the first light-emitting unit 10, the first light-receiving unit 11, and the first filter 12. The first light-emitting unit 10 is placed underwater and emits the first light 30 in which the first wavelength 40 that is in a blue or green wavelength bandwidth is a center wavelength. The second optical communication device 2 is provided with the second light-emitting unit 20, the second light-receiving unit 21, and the second filter 22. The second light-emitting unit 20 is placed underwater and emits the second light 31 as signal light. The second light 31 is the light in which the second wavelength 41 that is in a green wavelength bandwidth when the first light 30 is blue and in a green or blue wavelength bandwidth when the first light 30 is purple is a center wavelength. The first filter 12 is configured to selectively transmit the light of a predetermined wavelength band including the second wavelength 41 but not including the first wavelength 40. The second filter 22 is configured to selectively transmit the light of the predetermined wavelength band including the first wavelength 40 but not including the second wavelength 41. With this, the color of the first light 30 emitted from the first optical communication device 1 and the color of the second light 31 emitted from the second optical communication device 2 can be differentiated from each other. Further, by the first filter 12, the light of the first light 30 can be suppressed from being incident on the first light-receiving unit 11. Further, by the second filter 22, the light of the second light 31 can be suppressed from being incident on the second light-receiving unit 21. As a consequence, it is possible to provide an underwater optical communication system 100 capable of performing bi-directional communication at the same time while preventing signal light interference. This makes it possible to shorten the time required for communication. Also, in the water, light is attenuated according to the communication distance. Green, blue, and purple light is less likely to be attenuated underwater. Thus, by performing optical communication using the blue first light 30 and the green second light 31 different in color from the first light 30, for example, as compared with the case of performing optical communication using such light as red light and orange light, it is possible to increase the communication range. As a result, even in the water, communication can be carried out between distant communication devices.

In this embodiment, as described above, the first optical communication device 1 is further provided with the third filter 13. The third filter 13 transmits light of the third wavelength 42 or greater, wherein the third wavelength 42 is greater than the first wavelength 40 but smaller than the second wavelength 41. With this, for example, in a case where a filter that changes in the characteristic of the light transmission wavelength bandwidth due to the angle of incident light is used as the first filter 12, even when the first light 30 is transmitted through the first filter 12, it is possible to remove the first light 30 by the third filter 13. Consequently, it is possible to suppress that the first light 30 is incident on the first light-receiving unit 11. Therefore, in the first light-receiving unit 11, the interference between the first light 30 and the second light 31 can be suppressed.

Further, in this embodiment, as described above, the first filter 12 and the second filter 22 each include at least an interference-type filter, and the third filter 13 includes an absorption-type filter. Here, the interference-type filter transmits only light of a predetermined wavelength bandwidth by causing the light reflected in the filter (the light to be interfered with) to interfere with the light incident on the filter. Therefore, the interference-type filter steeply changes in the transmittance of light at a predetermined wavelength. However, when light is incident in the interference-type filter from an oblique direction, the transmissible wavelength bandwidth of the interference-type filter is shifted toward the shorter wavelength side. On the other hand, the absorption-type filter transmits the light of a predetermined wavelength bandwidth by absorbing the light other than the predetermined wavelength bandwidth in the filter. Therefore, even if light is incident on the absorption-type filter from the oblique direction, the transmissible wavelength bandwidth does not change. Therefore, by configuring as described above, it is possible to remove the first light 30 transmitted through the first filter 12 by the absorption-type filter in a case where light is incident from the oblique direction or the like while suppressing that the light other than the predetermined wavelength bandwidth out of the light incident from the front direction is incident on first light-receiving unit 11 by the interference-type filter. Consequently, it is possible to suppress that the first light 30 interferes while suppressing that the light other than the predetermined wavelength bandwidth is incident on the first light-receiving unit 11.

Further, in this embodiment, as described above, the third filter 13 is provided at the position between the first filter 12 and the first light-receiving unit 11. This allows, out of the light incident on the first light-receiving unit 11, a part of the light after the light other than the predetermined wavelength bandwidth having the first wavelength 40 as a center wavelength has been removed by the first filter 12 to be incident on the third filter 13. Consequently, even in a case where the energy of the light incident on the first optical communication device 1 is large, it is possible to reduce the energy of the light incident on the third filter 13. Therefore, it is possible to suppress that the third filter 13 is heated by the energy of the absorbed light.

Further, in this embodiment, as described above, the first optical communication device 1 includes the first window 14 and is configured to emit the first light 30 through the first window 14 and receive the second light 31 through the first window 14. The second optical communication device 2 includes the second window 23 and is configured to emit the second light 31 through the second window 23 and receive the first light 30 through the second window 23. As a result, the first optical communication device 1 can emit light from the first light 30 and receive light from the second light 31, via the common first window 14. Consequently, as compared with the configuration in which the first optical communication device 1 performs the emission of the first light 30 and the reception of the second light 31 via separate windows, it is possible to suppress an increase in the number of components by one window and also possible to suppress the compilation of the device configuration. Further, the second optical communication device 2 can emit the second light 31 and receive the first light 30, via the common second window 23. Consequently, as compared with the configuration in which the second optical communication device 2 emits the second light 31 and receives the first light 30 through separate windows, it is possible to suppress the increase in the number of components by one window and also possible to suppress the complication of the device configuration.

Further, in this embodiment, as described above, the first optical communication device 1 is provided with the first housing 15 having the first opening 15b closed by the first window 14. The first light-emitting unit 10 and the first light-receiving unit 11 are provided at adjacent positions in the first housing 15. The second optical communication device 2 includes the second housing 24 having the second opening 24b closed by the second window 23. The second light-emitting unit 20 and the second light-receiving unit 21 are provided at adjacent positions in the second housing 24. Thus, even in a case where the first light-emitting unit 10 and the first light-receiving unit 11 are arranged at adjacent positions, it is possible to suppress by the third filter 13 that the first light 30 is received by the first light-receiving unit 11. Consequently, without placing a partition or the like, it is possible to place the first light-emitting unit 10 and the first light-receiving unit 11 at adjacent positions. Therefore, it is possible to reduce the size of the first optical communication device 1. Further, even in a case where the second light-emitting unit 20 and the second light-receiving unit 21 are arranged at adjacent positions, it is possible to suppress by the second filter 22 that the second light 31 is received by the second light-receiving unit 21. Consequently, without placing a partition or the like, it is possible to place the second light-emitting unit 20 and the second light-receiving unit 21 at adjacent positions. This enables the miniaturization of the second optical communication device 2.

In this embodiment, as described above, at least one of the first optical communication device 1 and the second optical communication device 2 is provided to the moving body 82 that moves underwater. Thus, for example, even in a case where the first light 30a reflected by a scattering material 91 and/or the first window 14, etc., is incident on the first light-receiving unit 11 from the oblique direction, it is possible to suppress by the third filter 13 that the reflected first light is incident on the first light-receiving unit 11. Therefore, it is possible to widen the communicable viewing angle of the first optical communication device 1 and the second optical communication device 2. Consequently, in a case where it is difficult to keep the relative position of the first optical communication device 1 and the second optical communication device 2 constant due to the movement of either the first optical communication device 1 or the second optical communication device 2, it is preferable to apply the underwater optical communication system 100 according to this embodiment.

In this embodiment, as described above, one of the first optical communication device 1 and the second optical communication device 2 is provided to the moving body 82, and the other thereof is provided to the fixed body 80 fixed underwater. Thus, it is possible to easily perform the positioning of the relative position of the first optical communication device 1 and the second optical communication device 2 to a communicable position because either one of the first optical communication device 1 and the second optical communication device 2 is provided to the fixed body 80.

Further, in this embodiment, as described above, the first optical communication device 1 and the second optical communication device 2 are configured to be able to emit the first light 30 and the second light 31, respectively, in the first irradiation angle range 50. Further, the first optical communication device 1 and the second optical communication device 2 are configured to be able to receive the second light 31 and the first light 30, respectively, from the second irradiation angle range 51 greater than the first irradiation angle range 50. Thus, between the first optical communication device 1 and the second optical communication device 2, it is possible to widen the communicable viewing angle. Consequently, for example, even in a case where the relative position between the first optical communication device 1 and the second optical communication device 2 changes, it is possible to suppress the necessity of increasing the accuracy of the alignment of the first optical communication device 1 and the second optical communication device 2.

Further, in this embodiment, as described above, the first light-emitting unit 10 and the second light-emitting unit 20 include the first laser light source 17 for generating the first light 30 and the second laser light source 26 for generating the second light 31, respectively. Thus, for example, as compared with the case in which the first light-emitting unit 10 and the second light-emitting unit 20 are each constituted by an LED (Light Emitting Diode), it is possible to suppress the increase in the peak width (half-width) of the first wavelength 40 and that of the second wavelength 41. Therefore, it is possible to suppress the first light 30 and second light 31 from becoming wide light. Consequently, as the first filter 12 and the second filter 22, it is possible to use an interference-type bandpass filter for selectively transmitting light of a narrowband wavelength region. Further, since the optical communication using a laser light source is high in communication speed than optical communication using an LED, it is possible to increase the communication speed between the first optical communication device 1 and the second optical communication device 2.

### [Modified Embodiment]

It should be understood that the embodiments disclosed here are examples in all respects and are not restrictive. The scope of the present invention is indicated by the appended claims rather than by the descriptions of the above-described embodiments and includes all modifications (changes) within the meanings and the scopes equivalent to the claims.

For example, in the above embodiment, an example is shown in which it is configured such that the first light-emitting unit 10 emits blue light as the first light 30 and the second light-emitting unit 20 emits green light as the second light 31, but the present invention is not limited thereto. For example, the first light-emitting unit 10 may be configured to emit purple light as the first light 30. In a case where the first light-emitting unit 10 is configured to emit purple light as the first light 30, the second light-emitting unit 20 may be configured to emit green light or blue light as the second light 31.

In the above-described embodiment, an example is shown in which the first optical communication device 1 is provided with the third filter 13, but the present invention is not limited thereto. For example, as in the first modification shown in FIG. 10, the first optical communication device 1 may not be provided with the third filter 13. However, in a case where the first optical communication device 1 is not provided with the third filter 13, when the first light 30 is reflected and incident from an oblique direction, there is a possibility that the reflected first light 30 is transmitted through the first filter 12. Therefore, the first light 30 and the second light 31 may interfere with each other in the first light-receiving unit 11. For this reason, the first optical communication device 1 is preferably provided with the third filter 13.

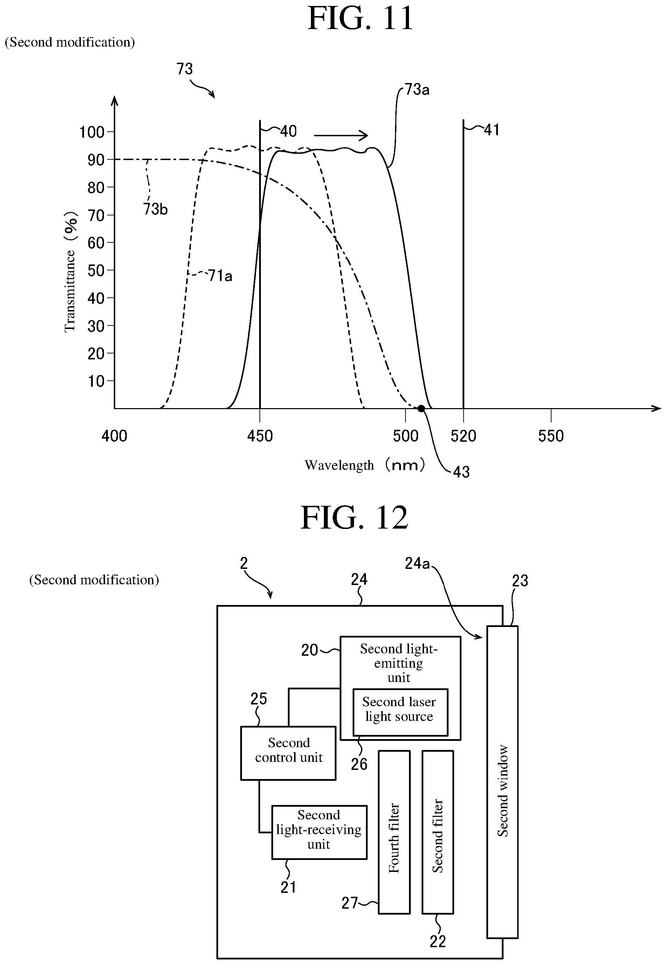

Further, in the above-described embodiment, an example is shown in which the first filter 12 and the second filter 22 are each composed of a filter in which the transmissible wavelength bandwidth shifts toward the short wavelength side due to the angle of the incident light, but the present invention is not limited thereto. In the present invention, for example, the first filter 12 and the second filter 22 may be each composed of a filter in which the transmissible wavelength bandwidth shifts due to the angle of the incident light as in the transmittance change curve 73a of the graph 73 shown in FIG. 11. In the case of using a filter in which the transmissible wavelength bandwidth shifts to the long-wavelength side due to the angle of the incident light, the second optical communication device 2 may be configured to include a fourth filter 27 (see FIG. 12). The fourth filter 27 includes a short-pass filter that transmits the light of a predetermined wavelength or smaller. Specifically, the fourth filter 27 may be configured to transmit the light of a fourth wavelength 43 (see FIG. 11) or smaller that is a wavelength greater than the first wavelength 40 but smaller than the second wavelength 41 as shown in the transmittance change curve 73b of the one-dot chain line in FIG. 11, between the second filter 22 and the second light-receiving unit 21. Note that in the graph 73 shown in FIG. 11, the vertical axis represents the transmittance, and the horizontal axis represents the wavelength.

In the above-described embodiment, an example is shown in which the first filter 12 and the second filter 22 are each composed of an interference-type filter, but the present invention is not limited thereto. For example, the first filter 12 and the second filter 22 each may be an absorption-type filter. In a case where the first filter 12 and the second filter 22 are each composed of an absorption-type filter, since the light transmissible wavelength bandwidth does not change due to the incident angle of light, the third filter 13 is not required to be provided. However, in the case of configuring the first filter 12 and the second filter 22 by an absorption-type filter, as compared with an interference-type filter, the change in the light transmittance at a predetermined wavelength is not steep. Therefore, since the filter will remove a part of the light of wavelength bandwidth to be transmitted originally to prevent interference, the intensity of the light incident on the light-receiving unit is reduced. For this reason, it is preferable to use an interference-type filter for the first filter 12 and the second filter 22.

Further, in the above-described embodiment, an example is shown in which the third filter 13 is an absorption-type long-pass filter, but the present invention is not limited to this. For example, the third filter 13 may be an absorption-type bandpass filter.

In the above-described embodiment, an example is shown in which the third filter 13 is placed at a position between the first filter 12 and the first light-receiving unit 11, but the present invention is not limited thereto. For example, the third filter 13 may be provided between the first window 14 and the first filter 12. However, in a case where the third filter 13 is provided at a position between the first window 14 and the first filter 12, when the energy of the incident light is large, the third filter 13 generates heat. Therefore, the third filter 13 is preferably provided at a position between the first filter 12 and the first light-receiving unit 11.

Further, in the above-described embodiment, an example is shown in which the first optical communication device 1 emits the first light 30 and receives the second light 31 through the first window 14, but the present invention is not limited thereto. For example, the first optical communication device 1 may include a plurality of windows, and the light emission of the first light 30 and the light reception of second light 31 may be performed by separate windows.

In the above-described embodiment, an example is shown in which the second optical communication device 2 emits the second light 31 and receives the first light 30 through the second window 23, but the present invention is not limited thereto. For example, the second optical communication device 2 may have a plurality of windows, and the light emission of the second light 31 and the light reception of the first light 30 may be performed by separate windows.

In the above-described embodiment, an example is shown in which the first light-emitting unit 10 and the first light-receiving unit 11 are provided at adjacent positions in the first housing 15, but the present invention is not limited thereto. For example, it may be configured such that a partition may be provided in the first housing 15 and that the first light-emitting unit 10 and the first light-receiving unit 11 are provided at non-adjacent positions.

In the above-described embodiment, an example is shown in which the second light-emitting unit 20 and the second light-receiving unit 21 are provided at adjacent positions in the second housing 24, but the present invention is not limited thereto. For example, it may be configured such that a partition is provided in the second housing 24 and that the second light-emitting unit 20 and the second light-receiving unit 21 are provided at non-adjacent positions.

Further, the above-described embodiment, an example is shown in which it is configured such that the second optical communication device 2 is provided to the moving body 82, but the present invention is not limited thereto. For example, the first optical communication device 1 may be provided to the moving body 82. Further, the first optical communication device 1 and the second optical communication device 2 may be provided to separate moving bodies.

In addition, in the above-described embodiment, an example is shown in which the moving body 82 is an AUV, but the present invention is not limited thereto. For example, the moving body 82 may be a manned submersible (HOV: Human Occupied Vehicle). The moving body 82 may also be a remote-controlled robot (ROV: Remotely Operated Vehicle) operated by a person via a cable. The moving body 82 may be another ship.

In the above-described embodiment, an example is shown in which the first optical communication device 1 is provided to the fixed body 80 and that the second optical communication device 2 is provided to the moving body 82, but the present invention is not limited thereto. For example, the first optical communication device 1 may be provided to the moving body 82, and the second optical communication device 2 may be provided to the fixed body 80.

In the above-described embodiment, an example is shown in which the first optical communication device 1 and the second optical communication device 2 are configured to receive the second light 31 and the first light 30 from a second irradiation angle range 51 greater than the first irradiation angle range 50, but the present invention is not limited thereto. For example, the first optical communication device 1 and the second optical communication device 2 may be configured to be able to receive the second light 31 and the first light 30 from an irradiation angular range smaller than the first irradiation angle range 50. However, in a case where the first optical communication device 1 and the second optical communication device 2 are configured to be able to receive the second light 31 and the first light 30 from an irradiation angular range smaller than the first irradiation angle range 50, it must be configured as follows. That is, the positional accuracy of the arrangement of the second optical communication device 2 at the time of communication between the first optical communication device 1 and the second optical communication device 2 needs to be increased as compared with the configuration in which the first optical communication device 1 and the second optical communication device 2 can receive the second light 31 and the first light 30 from the second irradiation angle range 51. Therefore, the first optical communication device 1 and the second optical communication device 2 are preferably configured to be able to receive the second light 31 and the first light 30 from a second irradiation angle range 51 greater than the first irradiation angle range 50.

Further, in the above-described embodiment, an example is shown in which the first optical communication device 1 and the second optical communication device 2 are configured such that the first light 30 and the second light 31 can be emitted to the first irradiation angle range 50, but the present invention is not limited thereto. The first optical communication device 1 and the second optical communication device 2 may be configured to be able to emit the first light 30 and the second light 31 at mutually different illumination angular ranges.

In the above-described embodiment, an example is shown in which the first optical communication device 1 and the second optical communication device 2 are configured to be able to receive the second light 31 and the first light 30 from a second irradiation angle range 51, but the present invention is not limited thereto. The first optical communication device 1 and the second optical communication device 2 may be configured to receive the second light 31 and the first light 30 from different irradication angular ranges.

In the above-described embodiment, an example is shown in which the first light-emitting unit 10 and the second light-emitting unit 20 are configured to include the first laser light source 17 and the second laser light source 26, but the present invention is not limited thereto. For example, the first light-emitting unit 10 and the second light-emitting unit 20 may be each configured to include an LED light source instead of the first laser light source 17 and the second laser light source 26. However, in the LED light source, the half-width of the light emitted is increased, and therefore, it is impossible to use a bandpass filter of the interference-type. Further, in optical communication using an LED light source, as compared with optical communication using a semiconductor laser, the communication speed is reduced. Therefore, the first light-emitting unit 10 and the second light-emitting unit 20 are preferably configured to include the first laser light source 17 and the second laser light source 26.

The optical characteristics, such as, e.g., the wavelength bandwidth and the transmittance, of the first light-emitting unit 10, the second light-emitting unit 20, the first filter 12, the second filter 22, and the third filter 13, described in the above-described embodiment, are merely examples and are not limited to the above-described optical characteristics.

### [Aspects]

It will be appreciated by those skilled in the art that the above-described exemplary embodiments are illustrative of the following aspects.

### (Item 1)

An underwater optical communication system comprising:
a first optical communication device to be placed underwater, the first optical communication device including a first light-emitting unit, a first light-receiving unit, and a first filter, the first light-emitting unit being configured to emit, as signal light, first light in which a first wavelength that is in a blue or purple wavelength bandwidth is a center wavelength; and
a second optical communication device configured to be placed underwater to perform bi-directional optical communication with the first optical communication device, the second optical communication device including a second light-emitting unit, a second light-receiving unit, and a second filter, the second light-emitting unit being configured to emit, as signal light, second light in which a second wavelength that is in a green wavelength bandwidth when the first light is green and in a green or blue wavelength bandwidth when the first light is purple is a center wavelength,
wherein the first filter is configured to selectively transmit light of a predetermined wavelength band including the second wavelength but not including the first wavelength, and
wherein the second filter is configured to selectively transmit light of a predetermined wavelength band including the first wavelength but not including the second wavelength.

### (Item 2)

The underwater optical communication system as recited in the above-described Item 1,
wherein the first optical communication device further includes a third filter that transmits light of a wavelength greater than a third wavelength that is a wavelength greater than the first wavelength but smaller than the second wavelength.

### (Item 3)

The underwater optical communication system as recited in the above-described Item 2,
wherein the first filter and the second filter include at least an interference-type filter, and
wherein the third filter includes an absorption-type filter.

### (Item 4)

The underwater optical communication system as recited in the above-described Item 2,
wherein the third filter is provided at a position between the first filter and the first light-receiving unit.

### (Item 5)

The underwater optical communication system as recited in the above-described Item 2,
wherein the first optical communication device further includes a first window, the first optical communication device being configured to emit the first light through the first window and receive the second light through the first window, and
wherein the second optical communication device further includes a second window, the second optical communication device being configured to emit the second light via the second window and receive the first light through the second window.

### (Item 6)

The underwater optical communication system as recited in the above-described Item 5,
wherein the first optical communication device is provided with a first housing having a first opening closed by the first window,
wherein the first light-emitting unit and the first light-receiving unit are arranged at adjacent positions in the first housing,
wherein the second optical communication device is provided with a second housing having a second opening closed by the second window, and
wherein the second light-emitting unit and the second light-receiving unit are arranged at adjacent positions in the second housing.

### (Item 7)

The underwater optical communication system as recited in the above-described Item 2,
Wherein at least one of the first optical communication device and the second optical communication device is provided to a moving body that moves underwater.

### (Item 8)

The underwater optical communication system as as recited in the above-described Item 7,
wherein one of the first optical communication device and the second optical communication device is provided to the moving body, and the other thereof is provided to a fixed body fixed underwater.

### (Item 9)

The underwater optical communication system as recited in the above-described Item 2,
wherein the first optical communication device and the second optical communication device are configured to be able to emit the first light and the second light within a first irradiation angle range, respectively, and receive the second light and the first light within a second irradiation angle range greater than the first irradiation angle range.

### (Item 10)

The underwater optical communication system as recited in the above-described Item 9,
wherein the first light-emitting unit and the second light-emitting unit include a laser light source that generates the first light and a laser light source that generates the second light, respectively.

### [Description of Symbols]

- 1:: First optical communication device
- 2:: Second optical communication device
- 10:: First light-emitting unit
- 11:: First light-receiving unit
- 12:: First filter
- 13:: Third filter
- 14:: First window
- 15:: First housing
- 15a:: First opening
- 17:: First laser light source
- 20:: Second light-emitting unit
- 21:: Second light-receiving unit
- 22:: Second filter
- 23:: Second window
- 24:: Second housing
- 24a:: Second opening
- 26:: Second laser light source
- 30:: First light
- 31:: Second light
- 40:: First wavelength
- 41:: Second wavelength
- 42:: Third wavelength
- 50:: First irradiation angle range
- 51:: Second irradiation angle range
- 80:: Fixed body
- 82:: Moving body
- 100:: Underwater optical communication system

## Claims

1. An underwater optical communication system comprising:
a first optical communication device to be placed underwater, the first optical communication device including a first light-emitting unit, a first light-receiving unit, and a first filter, the first light-emitting unit being configured to emit, as signal light, first light in which a first wavelength that is in a blue or purple wavelength bandwidth is a center wavelength; and
a second optical communication device configured to be placed underwater to perform bi-directional optical communication with the first optical communication device, the second optical communication device including a second light-emitting unit, a second light-receiving unit, and a second filter, the second light-emitting unit being configured to emit, as signal light, second light in which a second wavelength that is in a green wavelength bandwidth when the first light is green and in a green or blue wavelength bandwidth when the first light is purple is a center wavelength,
wherein the first filter is configured to selectively transmit light of a predetermined wavelength band including the second wavelength but not including the first wavelength, and
wherein the second filter is configured to selectively transmit light of a predetermined wavelength band including the first wavelength but not including the second wavelength.

2. The underwater optical communication system as recited in claim 1,
wherein the first optical communication device further includes a third filter that transmits light of a wavelength greater than a third wavelength that is a wavelength greater than the first wavelength but smaller than the second wavelength.

3. The underwater optical communication system as recited in claim 2,
wherein the first filter and the second filter include at least an interference-type filter, and
wherein the third filter includes an absorption-type filter.

4. The underwater optical communication system as recited in claim 2,
wherein the third filter is provided at a position between the first filter and the first light-receiving unit.

5. The underwater optical communication system as recited in claim 2,
wherein the first optical communication device further includes a first window, the first optical communication device being configured to emit the first light through the first window and receive the second light through the first window, and
wherein the second optical communication device further includes a second window, the second optical communication device being configured to emit the second light through the second window and receive the first light through the second window.

6. The underwater optical communication system as recited in claim 5,
wherein the first optical communication device is provided with a first housing having a first opening closed by the first window,
wherein the first light-emitting unit and the first light-receiving unit are arranged at adjacent positions in the first housing,
wherein the second optical communication device is provided with a second housing having a second opening closed by the second window, and
wherein the second light-emitting unit and the second light-receiving unit are arranged at adjacent positions in the second housing.

7. The underwater optical communication system as recited in claim 2,
wherein at least one of the first optical communication device and the second optical communication device is provided to a moving body that moves underwater.

8. The underwater optical communication system as as recited in claim 7,
wherein one of the first optical communication device and the second optical communication device is provided to the moving body, and the other thereof is provided to a fixed body fixed underwater.

9. The underwater optical communication system as recited in claim 2,
wherein the first optical communication device and the second optical communication device are configured to be able to emit the first light and the second light within a first irradiation angle range, respectively, and receive the second light and the first light within a second irradiation angle range greater than the first irradiation angle range.

10. The underwater optical communication system as recited in claim 9,
wherein the first light-emitting unit and the second light-emitting unit include a laser light source that generates the first light and a laser light source that generates the second light, respectively.
